Europäisches Patentamt

European Patent Office

Office européen des brevets

(11) Numéro de publication: **0 325 879 B1**

# FASCICULE DE BREVET EUROPEEN

(45) Date de publication de fascicule du brevet: **25.11.92** (51) Int. Cl.⁵: **G21C 1/02**, G21C 15/00

(21) Numéro de dépôt: **88403334.1**

(22) Date de dépôt: **27.12.88**

(54) **Réacteur nucléaire à neutrons rapides comportant un échangeur de chaleur intermédiaire perfectionné.**

(30) Priorité: **29.01.88 FR 8801067**

(43) Date de publication de la demande:
**02.08.89 Bulletin 89/31**

(45) Mention de la délivrance du brevet:
**25.11.92 Bulletin 92/48**

(84) Etats contractants désignés:
**DE FR GB IT**

(56) Documents cités:
**EP-A- 0 131 508**
**FR-A- 1 511 662**
**US-A- 4 705 662**

(73) Titulaire: **FRAMATOME**
**Tour Fiat 1, Place de la Coupole**
**F-92400 Courbevoie(FR)**

(72) Inventeur: **Thevenin, Michel**
**11 allée du Mali**
**F-94260 Fresnes(FR)**
Inventeur: **Cassou de Salle, Guy**
**15 Allée George Sand**
**F-69330 Jonage(FR)**
Inventeur: **Mauget, Christian**
**64 Impasse du Coteau**
**F-69280 Marcy l'Etoile(FR)**

(74) Mandataire: **Bouget, Lucien et al**
**Cabinet Lavoix 2, Place d'Estienne d'Orves**
**F-75441 Paris Cédex 09(FR)**

Rank Xerox (UK) Business Services

## Description

L'invention concerne un réacteur nucléaire à neutrons rapides de type intégré comportant un échangeur de chaleur intermédiaire perfectionné.

Les réacteurs nucléaires à neutrons rapides de type intégré comportent une cuve de grandes dimensions ou cuve principale contenant le fluide primaire de refroidissement du réacteur qui est généralement constitué par un métal liquide tel que du sodium. Le coeur du réacteur est plongé dans le métal liquide primaire qui est mis en circulation à l'intérieur de la cuve, par des pompes primaires immergées dans le sodium, sur une certaine hauteur.

Des échangeurs de chaleur intermédiaires assurent le refroidissement du métal liquide primaire, par échange de chaleur avec du métal liquide secondaire qui est lui-même utilisé pour la production de vapeur dans des générateurs de vapeur situés à l'extérieur de la cuve.

Les échangeurs de chaleur intermédiaires comportent un faisceau de tubes droits et une enveloppe de faisceau entourant ces tubes et comportant une ouverture d'entrée en partie haute du faisceau pour l'entrée du sodium primaire chaud et une ouverture en partie basse pour la sortie du sodium liquide refroidi, par circulation dans la direction verticale et de haut en bas, au contact des tubes du faisceau.

Le sodium secondaire circule à l'intérieur des tubes du faisceau et assure un prélèvement de chaleur sur le fluide primaire. A l'intérieur de la cuve du réacteur sont montées des structures internes et en particulier une paroi appelée redan qui sépare le volume intérieur de la cuve, autour du coeur, en une partie supérieure ou collecteur chaud recevant le sodium primaire à la sortie du coeur et une partie inférieure ou collecteur froid dans lequel pénètre le sodium refroidi après son passage dans les échangeurs intermédiaires, pour être repris par les pompes et réinjecté à la base du coeur.

Les échangeurs intermédiaires sont montés de façon à traverser le redan de manière étanche et de façon que leur ouverture supérieure soit dans le collecteur chaud et leur ouverture inférieure dans le collecteur froid.

Dans les réacteurs à neutrons rapides de conception récente, on cherche à réduire les coûts des différents composants et en particulier des composants intégrés à la cuve tels que les échangeurs intermédiaires.

Dans le cas des échangeurs intermédiaires, on a pensé à allonger le faisceau de tubes au maximum, pour réduire à la fois le nombre des tubes et le diamètre de ces tubes.

Cependant, la disposition actuelle des structures internes de la cuve d'un réacteur nucléaire à neutrons rapides refroidi au sodium et en particulier la conception du redan et de la traversée étanche des échangeurs intermédiaires ne permet pas d'obtenir une circulation verticale de sodium primaire au contact des tubes du faisceau sur une très grande hauteur. L'écoulement du sodium primaire s'effectue par gravité le long des tubes du faisceau, entre la partie supérieure de ce faisceau située dans le collecteur chaud, un peu au-dessus du passage étanche de l'échangeur intermédiaire à travers le redan et la partie inférieure du faisceau située dans le collecteur froid.

Le niveau du sodium primaire dans le collecteur chaud qui est supérieur d'environ deux mètres au niveau du sodium dans le collecteur froid permet une circulation par convection forcée du sodium primaire à l'intérieur de l'échangeur.

La hauteur totale du faisceau ne représente qu'une longueur approximativement égale au tiers de la longueur totale de l'échangeur.

D'autre part, il est nécessaire de disposer d'un obturateur de type mécanique permettant de fermer l'ouverture haute de l'échangeur intermédiaire pour arrêter la circulation du sodium et le fonctionnement de l'échangeur. Un tel obturateur mécanique peut présenter des difficultés de fonctionnement dans l'ambiance du réacteur.

On connaît par le US-A-4.705.662 un générateur de vapeur disposé à l'intérieur de la cuve d'un réacteur nucléaire refroidi par du sodium liquide. Les tubes du générateur de vapeur délimitent plusieurs conduits coaxiaux dans lesquels circulent de l'eau et un gaz neutre et sont mis en contact avec le sodium liquide de refroidissement du réacteur. Une paroi en forme de cloche disposée autour de l'enveloppe du générateur de vapeur permet de canaliser la circulation du sodium. Les tubes du générateur de vapeur sont reliés à des collecteurs d'eau et de gaz neutre disposés au-dessus de la dalle du réacteur. Cette disposition ne peut pas être appliquée dans le cas d'un réacteur nucléaire refroidi par du sodium de type intégré comportant des échangeurs intermédiaires.

Dans le FR-A-1.511.662, on a décrit un réacteur nucléaire refroidi par un liquide tel que le sodium comportant des échanteurs de chaleur disposés dans la cuve du réacteur dont l'enveloppe renfermant un faisceau de tubes comporte des ouvertures de passage du sodium dans sa partie supérieure. Une cloche est fixée sur l'enveloppe autour des ouvertures de passage de sodium et une canalisation reliée à la cloche permet d'injecter un gaz neutre sous la cloche pour interrompre la circulation du sodium dans l'échangeur. La partie supérieure des tubes du faisceau et la plaque tubulaire supérieure de l'échangeur sont disposés sous le niveau du sodium liquide dans la cuve, si bien que la hauteur du faisceau reste limitée.

La disposition de la plaque tubulaire au voisinage ou au-dessus du niveau du sodium liquide pose des problèmes quant à la circulation du sodium liquide dans l'échangeur.

On ne connaissait pas jusqu'ici de réacteur nucléaire à neutrons rapides de type intégré comportant un échangeur de chaleur plongeant dans un métal liquide de refroidissement du réacteur dont la plaque supérieure est disposée au-dessus du métal liquide de manière à allonger le faisceau et qui peut fonctionner de manière totalement continue après amorçage.

Le but de l'invention est donc de proposer un réacteur nucléaire à neutrons rapides de type intégré ne présentant pas les inconvénients mentionnés et comportant une cuve contenant un métal liquide primaire constituant le réfrigérant du réacteur et un échangeur de chaleur intermédiaire, plongé dans le métal liquide primaire contenu dans la cuve et surmonté par une couche de gaz neutre, assurant le refroidissement du métal liquide primaire par un métal liquide secondaire, et comportant un faisceau de tubes reliés à leur partie supérieure à une plaque tubulaire supérieure et une enveloppe cylindrique entourant le faisceau disposés verticalement, l'enveloppe comportant une ouverture haute à la partie supérieure du faisceau et une ouverture basse en partie inférieure, situées de part et d'autre d'une paroi ou redan séparant le volume intérieur de la cuve du réacteur en une partie supérieure ou collecteur chaud recevant le métal liquide venant du coeur du réacteur et une partie inférieure ou collecteur froid recevant le métal liquide primaire sortant de l'échangeur, une paroi en forme de cloche fixée autour de l'enveloppe du faisceau au-dessus du redan délimitant avec celle-ci un espace annulaire ouvert à sa partie inférieure et fermé à sa partie supérieure dans lequel débouche l'ouverture haute de l'enveloppe du faisceau, de façon à créer une circulation de métal liquide primaire venant du collecteur chaud, d'abord dirigée vers le haut dans l'espace annulaire puis de haut en bas dans l'enveloppe, en contact avec le faisceau, la paroi en forme de cloche étant reliée à un tube assurant la liaison entre la partie supérieure de l'espace annulaire au-dessus de l'ouverture haute, et un volume de gaz inerte.

Dans ce but, la plaque tubulaire supérieure de l'échangeur de chaleur est située, en position de service de l'échangeur, dans la couche de gaz neutre surmontant le métal liquide et le réacteur nucléaire comporte de plus un conduit comportant au moins une partie en forme de convergent-divergent joignant une zone du collecteur chaud à une zone située à l'intérieur de l'enveloppe du faisceau à un niveau inférieur au niveau de la partie inférieure ouverte de l'espace annulaire et un tube reliant le col du convergent-divergent à la partie supérieure de l'espace annulaire, au-dessus de l'ouverture haute de l'échangeur.

Afin de bien faire comprendre l'invention, on va maintenant décrire, à titre d'exemple non limitatif, en se référant aux figures jointes en annexe, plusieurs modes de réalisation d'un réacteur nucléaire comportant un échangeur de chaleur intermédiaire amélioré suivant l'invention.

La figure 1 est une vue en coupe par un plan vertical d'un échangeur intermédiaire suivant l'art antérieur en position dans la cuve d'un réacteur nucléaire.

La figure 2 est une vue en coupe analogue à la vue de la figure 1, d'un échangeur de chaleur intermédiaire d'un réacteur suivant l'invention.

La figure 3 est une demi-vue en coupe d'un échangeur de chaleur intermédiaire perfectionné d'un réacteur suivant l'invention.

La figure 4 est une vue à plus grande échelle du détail 4 de la figure 3.

La figure 5 est une vue à plus grande échelle du détail 5 de la figure 3.

La figure 6 est une vue à plus grande échelle du détail 6 de la figure 5.

La figure 7 est une vue analogue à la figure 4, d'une variante de réalisation du dispositif à convergent-divergent.

La figure 8 représente une seconde variante de réalisation du dispositif à convergent-divergent.

La figure 9 est une demi-vue en coupe d'un échangeur intermédiaire selon l'invention comportant un dispositif à convergent-divergent selon une troisième variante.

La figure 10 est une vue à plus grande échelle du détail 10 de la figure 9.

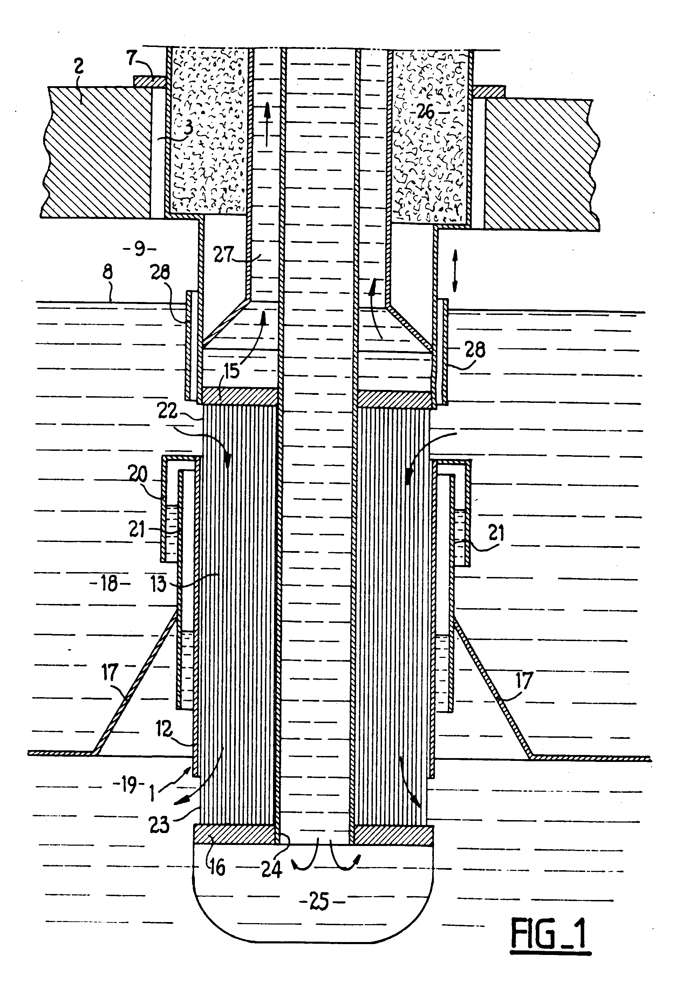

Sur la figure 1, on voit un échangeur de chaleur intermédiaire d'un réacteur nucléaire à neutrons rapides refroidi par du sodium liquide, désigné de manière générale par le repère 1. Cet échangeur intermédiaire 1 traverse la dalle 2 recouvrant la cuve du réacteur, au niveau d'un passage de traversée 3 et repose sur la dalle par l'intermédiaire d'un anneau de support 7. La cuve du réacteur renferme une masse de sodium liquide dont le niveau supérieur 8 est un peu en-dessous de la dalle 2. L'espace 9 compris entre le niveau 8 et la surface inférieure de la dalle 2 est rempli d'argon.

L'échangeur intermédiaire comporte un corps cylindrique entouré par une virole de fermeture constituant l'enveloppe 12 du faisceau 13.

Le faisceau 13 est constitué par un ensemble de tubes droits verticaux fixés entre une plaque tubulaire supérieure 15 et une plaque tubulaire inférieure 16.

Les structures internes de la cuve comportent en particulier une paroi de séparation 17 du volume intérieur de la cuve en une partie supérieure 18 placée au-dessus de la paroi 17 et une partie inférieure 19 placée en-dessous. La partie 18 constitue le collecteur chaud recevant le sodium liquide échauffé sortant du coeur alors que la partie 19 constitue le collecteur froid.

Sur l'échangeur intermédiaire 1 est fixée une cloche 20 qui coopère avec une virolé 21 solidaire du redan 17 pour constituer un passage étanche de l'échangeur intermédiaire, l'étanchéité étant assurée par une atmosphère d'argon maintenue sous la cloche 20.

La paroi 12 de l'échangeur intermédiaire comporte une ouverture haute 22 située en-dessous de la plaque tubulaire 15 et une ouverture basse 23 située au-dessus de la plaque tubulaire inférieure 16. L'ouverture 22 débouche dans le collecteur chaud 18 et l'ouverture 23 dans le collecteur froid 19.

Les plaques tubulaires 15 et 16 sont réalisées sous forme annulaire et sont fixées, à leur partie centrale, à un tube 24 débouchant dans la partie inférieure 25 de l'échangeur de chaleur en-dessous de la plaque tubulaire inférieure 16, constituant un répartiteur de métal liquide d'échange dans les tubes du faisceau 13.

La partie supérieure de l'échangeur intermédiaire, au-dessus de la plaque tubulaire 15, comporte un bouchon de protection biologique 26 ménageant à sa partie intérieure un canal annulaire 27.

Le sodium liquide primaire chaud du collecteur 18 pénètre dans l'échangeur intermédiaire par l'ouverture haute 22 constituant sa fenêtre d'entrée, circule de haut en bas au contact de la surface extérieure des tubes du faisceau 13 et ressort de l'échangeur par la fenêtre 23, pour pénétrer dans le collecteur froid 19.

Le sodium secondaire circule d'abord de haut en bas dans le tube central 24, puis est réparti dans les tubes du faisceau 13, au niveau du répartiteur 25, circule de bas en haut à l'intérieur des tubes du faisceau 13 en enfin, ressort du faisceau et de l'échangeur intermédiaire par le canal annulaire supérieur 27.

Le refroidissement du sodium primaire est assuré par le sodium secondaire, pendant leur circulation à contre-courant au niveau du faisceau 13.

Un obturateur 28 de forme cylindrique peut être manoeuvré pour être amené en position de fermeture de l'ouverture haute 22. On interrompt ainsi la circulation de sodium primaire dans l'échangeur intermédiaire 1 et le fonctionnement de cet échangeur.

Comme on le voit sur la figure 1, la circulation du sodium primaire dans l'échangeur est assurée par différence de pression entre le collecteur chaud et le collecteur froid, cette différence de pression correspondant sensiblement à une dénivelée de deux mètres de sodium. L'ouverture haute 22 de l'échangeur est située juste au-dessus de la traversée étanche 20, ce niveau correspondant à un niveau situé un peut au-dessus de l'extrémité supérieure du coeur du réacteur qui est plongé dans le sodium remplissant la cuve. Ce niveau de départ étant fixé, la hauteur utile de l'échangeur, c'est-à-dire la hauteur du faisceau 13, est déterminée par la position suivant la hauteur de la cuve, du collecteur froid 19 dans lequel débouche le fenêtre 23.

D'autre part, le fonctionnement de l'obturateur mécanique 28 est délicat dans l'ambiance du réacteur nucléaire en fonctionnement dans lequel le sodium liquide est à une température supérieure à 500°.

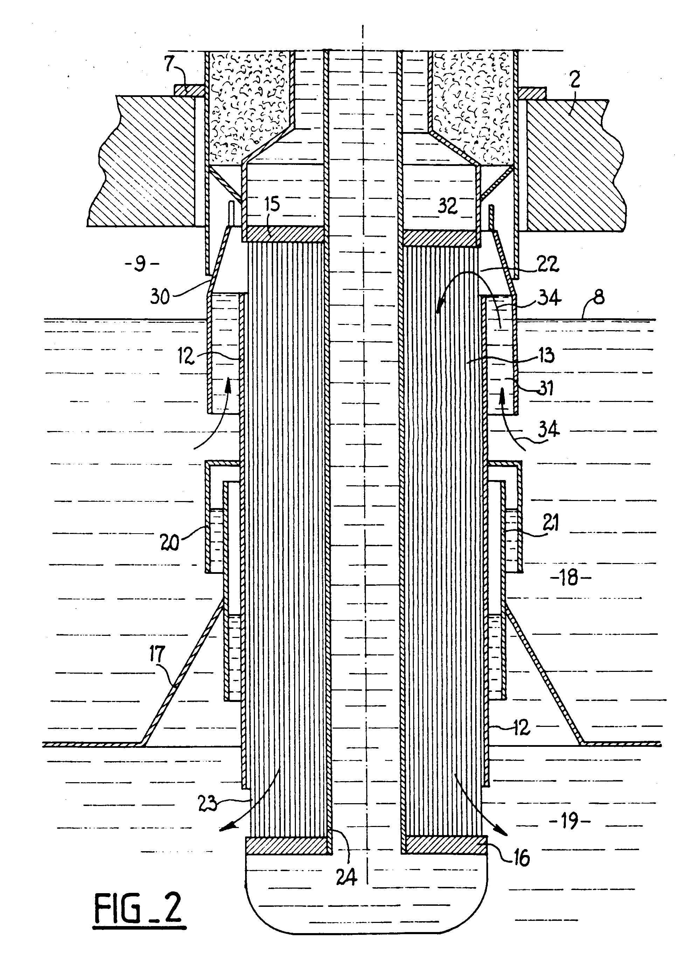

L'échangeur intermédiaire suivant l'invention représenté sur la figure 2 permet d'augmenter sensiblement la longueur du faisceau et de simplifier considérablement la commande de mise en fonctionnement ou d'arrêt de l'échangeur.

Les éléments correspondants sur les figures 1 et 2 portent les mêmes repères.

Comparativement au dispositif suivant l'art antérieur représenté sur la figure 1, le dispositif suivant l'invention de la figure 2 comporte une enveloppe 12 et un faisceau 13 de hauteurs nettement accrues, la plaque tubulaire supérieure 15 étant située un peu en-dessous de la dalle 2 et dans l'espace 9 rempli de gaz inerte situé sous la dalle.

Une paroi en forme de cloche 30 est fixée autour de l'enveloppe de faisceau 12, de manière coaxiale à cette enveloppe, dans sa partie supérieure située dans le collecteur chaud et dans l'espace 9 en gaz inerte.

La paroi 30 ménage un espace annulaire 31 autour de l'enveloppe 12, cet espace annulaire 31 étant ouvert à sa partie inférieure à l'intérieur du collecteur chaud 18 et fermé à sa partie supérieure, juste au-dessus de la plaque tubulaire 15, par le fond annulaire de la cloche 30. L'ouverture haute 22 de l'enveloppe 12 met en communication l'espace annulaire 31 avec le faisceau 13.

Un tube 32 fixé sur le fond annulaire de la cloche 30 et traversant celui-ci met en communication la partie supérieure de l'espace 31 avec un espace rempli de gaz inerte qui peut être l'espace 9 ou une capacité indépendante remplie de gaz inerte et reliée au tube 32 par l'intermédiaire d'une vanne ou d'un moyen de pompage et de refoulement de gaz inerte. On peut ainsi réaliser la mise en pression de la partie supérieure de l'espace annulaire 31 ou au contraire sa décompression par manoeuvre de la vanne ou la commande du moyen de pompage.

Comme il est visible sur la figure (flèches 34), le sodium primaire chaud sortant du coeur du réacteur pénètre dans l'espace annulaire 31, par sa partie inférieure, entre l'extrémité inférieure de la cloche 30 et le dispositif de passage étanche 20 de l'échangeur intermédiaire, c'est-à-dire à un niveau identique à celui de l'ouverture supérieure 22 du dispositif suivant l'art antérieur représenté sur la figure 1. Le sodium primaire chaud circule ensuite dans la direction verticale et de bas en haut, à l'intérieur de l'espace annulaire 31, pour pénétrer dans l'enveloppe 12 par l'ouverture haute 22. Le sodium primaire circule ensuite comme dans le cas de l'échangeur représenté sur la figure 1, de haut en bas, le long des tubes du faisceau pour ressortir par l'ouverture basse 23, dans le collecteur froid 19, en-dessous du redan 17.

La cloche 30 et son espace annulaire 31 constituent un siphon assurant la circulation du sodium.

Cette circulation peut être facilement interrompue en envoyant un gaz inerte sous pression par le tube 32, à la partie supérieure de l'espace annulaire 31, jusqu'au moment où le gaz inerte a repoussé le sodium contenu dans l'espace 31, jusqu'à un niveau situé en-dessous de la fenêtre d'entrée 22.

La circulation du sodium primaire peut être rétablie très facilement en assurant un échappement du gaz contenu dans la partie supérieure de l'espace annulaire 31 ou une aspiration de ce gaz, par le tube 32.

Lorsqu'il est en circulation dans l'échangeur intermédiaire, le sodium primaire est susceptible de se charger en gaz inerte et de libérer ce gaz inerte dans la partie supérieure de l'espace annulaire 31, avant de pénétrer par la fenêtre 22. L'accumulation de gaz qui en résulte risque de désamorcer le siphon et d'occasionner un arrêt non prévu de l'échangeur intermédiaire.

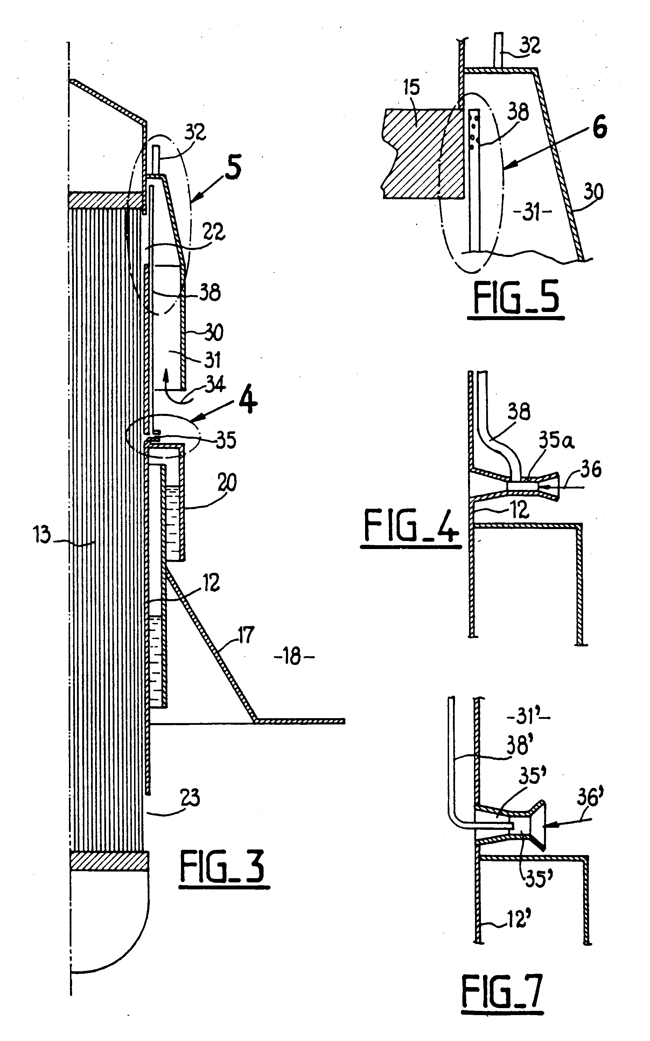

On a représenté sur la figure 3 un dispositif permettant d'éviter cet inconvénient.

Un conduit 35 en forme de convergent-divergent visible sur les figures 3 et 4 est fixé sur l'enveloppe de faisceau 12 et met en communication une zone du collecteur chaud située juste au-dessus du passage étanche 20 de l'échangeur avec l'espace de circulation entre les tubes du faisceau 13.

Pendant sa circulation suivant la direction des flèches 34, le sodium primaire subit des pertes de charge, en particulier au moment du retournement du flux dans l'ouverture 22 et au niveau des grilles de répartition de débit et des entretoises assurant le maintien des tubes du faisceau 13. Il en résulte une différence de pression entre les zones dont le conduit 35 assure la jonction, si bien qu'un flux de sodium primaire 36 circule dans le conduit 35, entre le collecteur chaud et l'espace de circulation du faisceau. Il se produit un effet de trompe et donc une aspiration au niveau du col 35a du convergent-divergent 35. Un tube 38 sensiblement vertical est relié par sa partie inférieure au niveau du col 35a au conduit 35.

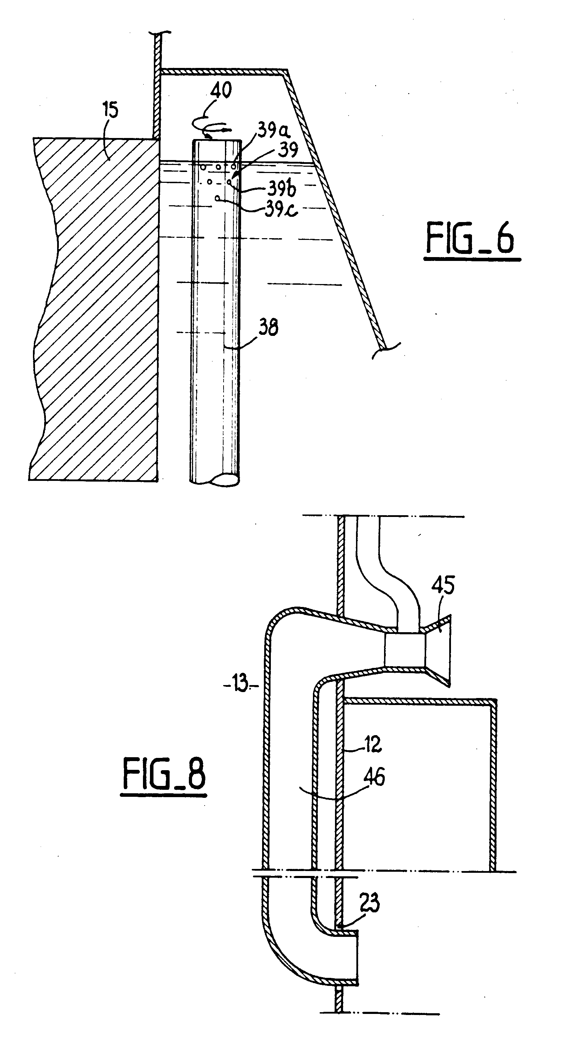

La partie supérieure du tube 38 se trouve sensiblement au niveau de la face supérieure de la plaque tubulaire 15, à l'intérieur de l'espace annulaire 31 délimité par la cloche 30, comme il est visible sur la figure 5.

La dépression obtenue dans le convergent-divergent, au niveau du col 35a produit une aspiration dans le tube 38 si bien que le fluide contenu dans la partie supérieure de l'espace 31 est mis en circulation vers le bas en direction du conduit 35.

Comme il est visible sur la figure 6, le tube 38 comporte à son extrémité supérieure des perforations 39 traversant sa paroi et disposées suivant trois zones annulaires successives situées à la suite d'une zone d'extrémité ou le tube 38 n'est pas percé sur quelques centimètres.

La première ligne de perforations 39a comporte un nombre de perforations supérieur au nombre de perforations de la seconde ligne 39b qui comporte elle-même un nombre de perforations supérieur au nombre de perforations de la ligne 39c.

Dans le cas où le sodium circule dans l'échangeur, l'espace 31 étant rempli de sodium jusqu'à un niveau situé au-dessus de l'extrémité supérieure du tube 38, un petit débit de sodium est aspiré par ce tube 38, sans perte de rendement notable de l'échangeur.

Dans le cas où par suite du dégazage du sodium, du gaz inerte tel que de l'argon s'accumule dans la partie supérieure de l'espace 31, le niveau de sodium se rapproche de l'extrémité supérieure du tube 38, jusqu'au moment où un tourbillon 40 se forme au-dessus de cette extrémité supérieure, comme il est visible sur la figure 6. Le tourbillon provoque l'entraînement de gaz inerte avec le sodium aspiré dans le tube 38.

Si la quantité de gaz inerte relâchée par le sodium en circulation est supérieure à la quantité de gaz inerte entraîné par le sodium dans le tube 38, le niveau de sodium continue à baisser dans l'espace 31, si bien que l'extrémité du tube 38 se trouve totalement émergée à un certain moment.

Le tube 38 assure l'aspiration de sodium par les ouvertures 39 et l'aspiration de gaz inerte par son extrémité émergée. Le mélange sodium-gaz inerte entraîné dans le tube 38 par aspiration est alors riche en gaz inerte.

Si la quantité de gaz inerte relâchée par le sodium est malgré tout supérieure à la quantité entraînée dans le tube 38, le niveau de sodium dans l'espace 31 continue à baisser jusqu'au moment où les ouvertures 39a se trouvent émergées. La quantité de sodium pénétrant dans le tube 38 diminue d'autant et le mélange aspiré est d'autant plus riche en gaz inerte.

Le niveau de sodium dans l'espace 31 peut néanmoins continuer à baisser, si bien que les ouvertures 39b puis 39c se trouvent au-dessus du niveau de sodium liquide. La quantité de sodium aspiré diminue ainsi par palier et le tube 38 a tendance à aspirer de plus en plus de gaz inerte, jusqu'au moment où les ouvertures 39c étant émergées, le tube 38 n'aspire plus que du gaz inerte.

Compte tenu de la faible densité de l'argon et de la perte de charge du dispositif, le débit massique de l'argon dans le tube 38 peut alors être très important et compenser un relâchement intense de gaz inerte par le sodium liquide en circulation.

Il apparaît donc que le système est autorégulateur, le niveau libre du sodium liquide dans l'espace annulaire s'établissant dans une position telle que le débit du gaz entraîné par le tube 38 soit égal à celui de l'argon libéré par le sodium liquide.

Sur la figure 7, on a représenté une variante du réalisation du dispositif d'évacuation d'argon à convergent-divergent dans laquelle le tube 38′ d'aspiration est engagé par l'intérieur de l'enveloppe de faisceau 12, dans le conduit 35′, jusqu'au niveau du col 35′a. Le tube 38′ est disposé verticalement à l'intérieur de l'enveloppe de faisceau 12′, par exemple à la place d'un tube du faisceau.

A sa partie supérieure non représentée, le tube 38′ pénètre dans l'espace annulaire 31′ par l'ouverture haute de l'enveloppe 12′. La partie supérieure du tube 38′ peut être disposée de la même façon que la partie supérieure du tube 38 représentée sur les figures 5 et 6.

Sur la figure 8, on a représenté une seconde variante de réalisation du dispositif d'aspiration, le conduit convergent-divergent 45 étant prolongé, du côté de sa sortie par une partie 46 à grand diamètre sensiblement verticale et disposée à l'intérieur de l'enveloppe de faisceau 12. La partie terminale 46 du conduit est prolongée jusqu'à l'ouverture basse 23 de sortie du sodium. Cette disposition permet d'accroître l'efficacité du dispositif en augmentant la différence de pression entre l'amont et l'aval du conduit 45, 46 et donc le débit de circulation du sodium dans ce conduit. De plus, on évite de mettre en contact localement les tubes du faisceau 13 avec du sodium primaire à haute température venant directement du collecteur chaud.

Dans tous les cas, pour obtenir un fonctionnement satisfaisant du dispositif, il est nécessaire de choisir un dimensionnement adéquat du dispositif d'aspiration. La pression au point de prélèvement, à l'extrémité supérieure du tube 38, est égale à la pression dans le collecteur chaud dans la zone 4, c'est-à-dire juste au-dessus du dispositif de passage étanche 20, diminuée de la hauteur de sodium entre cette zone et la partie supérieure de l'espace annulaire 31 et de la perte de charge à l'intérieur du tube 38, entre ces deux zones.

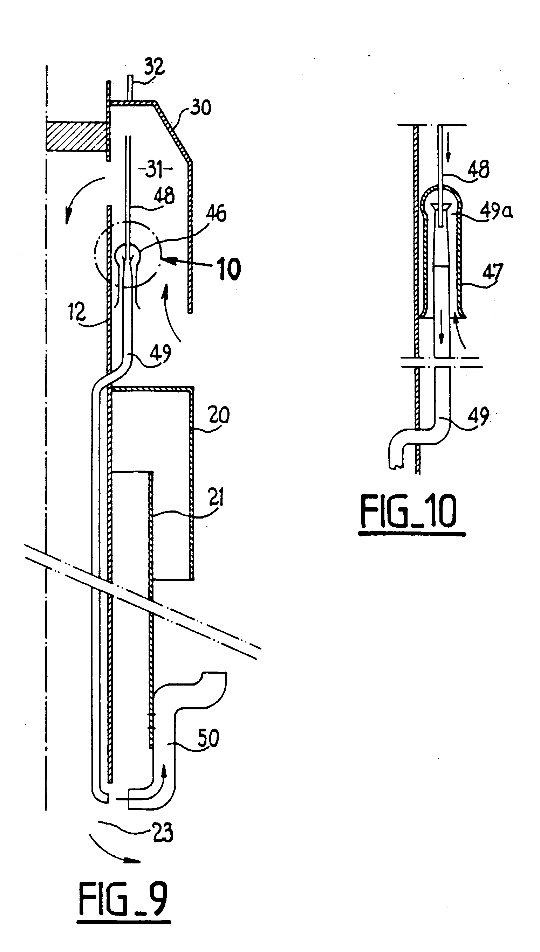

La disposition suivant la troisième variante représentée sur les figures 9 et 10 permet à la fois de réduire la perte de charge dans le tube d'aspiration et de diminuer la pression différentielle nécessaire pour assurer un écoulement dans ce tube.

Dans cette disposition, le convergent-divergent 46 constituant l'éjecteur d'argon est remonté à l'intérieur de l'espace annulaire 31 et réalisé sous forme coaxiale comme représenté sur la figure 10.

Cet éjecteur 46 comporte un conduit d'entrée 47 et un conduit de sortie 49 coaxial au conduit 47. Le conduit de sortie 49 comporte une extrémité supérieure à diamètre réduit 49a constituant le col du convergent-divergent au niveau duquel débouche le tube vertical 48. La partie supérieure du tube 48 est disposée de la même façon que la partie supérieure du tube 38 représentée sur les figures 5 et 6, dans la partie haute de l'espace annulaire 31.

Le conduit central 49 du convergent-divergent est prolongé vers le bas jusqu'à la fenêtre de sortie 23 de l'échangeur intermédiaire. La partie d'extrémité inférieure du conduit 49 débouche dans un déviateur 50 fixé sur la virole de passage 21 du composant ou sur le redan.

Dans ce mode de réalisation, la perte de charge dans le tube 48 de longueur réduite est fortement diminuée de même que la pression différentielle nécessaire pour entraîner l'écoulement dans le tube 48 est rendue beaucoup plus faible que dans les modes de réalisation décrits précédemment.

L'efficacité du dispositif qui est fonction du débit de sodium primaire en circulation dans l'échangeur peut être ainsi accrue ou préservée.

D'autre part, le déviateur de jet 50 permet de redresser l'écoulement de façon qu'à sa sortie dans le collecteur froid, cet écoulement soit pratiquement vertical. Dans ce cas, les bulles de gaz inerte contenu dans le sodium sortant du déviateur 50 remontent à la surface supérieure du collecteur froid, dans le dispositif d'étanchéité 20.

L'échangeur de chaleur du réacteur suivant l'invention présente donc l'avantage d'avoir un faisceau de tubes de longueur accrue et un moyen de mise en oeuvre et d'arrêt simple et fiable qui ne soit pas tributaire des conditions de fonctionnement du réacteur.

De plus, l'échangeur peut comporter un dispositif d'aspiration et d'élimination de gaz inerte assurant son fonctionnement en continu malgré le dégazage du sodium liquide en circulation.

Enfin, l'ensemble des moyens supplémentaires nécessaires pour la mise en oeuvre de l'invention est porté par l'enveloppe de faisceau de l'échangeur de chaleur et peut donc être mis en place en même temps que l'échangeur de chaleur dans la cuve du réacteur nucléaire. Ces moyens supplémentaires sont simples et peu coûteux et n'augmentent l'encombrement de l'échangeur de chaleur que dans une mesure très faible.

L'invention ne se limite pas aux modes de réalisation qui ont été décrits.

C'est ainsi qu'on peut imaginer de réaliser sous une forme différente la cloche solidaire de la partie supérieure de l'enveloppe de l'échangeur. On peut également réaliser de manière différente la commande d'introduction et d'échappement du gaz pour commander la mise en service ou l'arrêt de l'échangeur de chaleur.

Le dispositif éjecteur à convergent-divergent peut être réalisé sous des formes différentes de celles qui ont été décrites et monté d'une manière différente sur l'échangeur de chaleur.

Le dispositif suivant l'invention s'applique à tout réacteur nucléaire de type intégré refroidi par du métal liquide.

## Revendications

1. Réacteur nucléaire à neutrons rapides de type intégré comportant une cuve contenant un métal liquide primaire constituant le réfrigérant du réacteur et au moins un échangeur de chaleur intermédiaire (1), plongé dans le métal liquide primaire contenu dans la cuve et surmonté par une couche de gaz neutre (9), assurant le refroidissement du métal liquide primaire par un métal liquide secondaire, et comportant un faisceau de tubes (13) reliés à leur partie supérieure à une plaque tubulaire supérieure (15) et une enveloppe (12) cylindrique entourant le faisceau (13) disposés verticalement, l'enveloppe (12) comportant une ouverture haute à la partie supérieure du faisceau en-dessous de la plaque tubulaire supérieure et une ouverture basse en partie inférieure, situées de part et d'autre d'une paroi (17) ou redan séparant le volume intérieur de la cuve du réacteur en une partie supérieure ou collecteur chaud (18) recevant le métal liquide venant du coeur du réacteur et une partie inférieure ou collecteur froid (19) recevant le métal liquide primaire sortant de l'échangeur, une paroi (30) en forme de cloche fixée autour de l'enveloppe (12) du faisceau (13) au-dessus du redan (17) délimitant avec celle-ci un espace annulaire (31) ouvert à sa partie inférieure et fermé à sa partie supérieure dans lequel débouche l'ouverture haute (22) de l'enveloppe (12) du faisceau, de façon à créer une circulation de métal liquide primaire venant du collecteur chaud (18), d'abord dirigée vers le haut dans l'espace annulaire (31) puis de haut en bas dans l'enveloppe (12), en contact avec le faisceau (13), la paroi (30) en forme de cloche étant reliée à un tube (32) assurant la liaison entre la partie supérieure de l'espace annulaire (31) au-dessus de l'ouverture haute (22), et un volume de gaz inerte, caractérisé par le fait que la plaque tubulaire supérieure (15) de l'échangeur de chaleur (1) est située, en position de service de l'échangeur, dans la couche de gaz neutre (9) surmontant le métal liquide et que le réacteur nucléaire comporte de plus un conduit (35) comportant au moins une partie en forme de convergent-divergent joignant une zone du collecteur chaud (18) à une zone située à l'intérieur de l'enveloppe de faisceau (12), à un niveau inférieur au niveau de la partie inférieure ouverte de l'espace annulaire (31) et un tube (38) sensiblement vertical reliant le col (35a) du convergent-divergent à la partie supérieure de l'espace annulaire (31) au-dessus de l'ouverture haute (22) de l'enveloppe (12) du faisceau (13).

2. Réacteur nucléaire suivant la revendication 1, caractérisé par le fait que la partie en forme de convergent-divergent du conduit (35) est fixée par son extrémité de sortie en forme de divergent sur l'enveloppe de faisceau (12), de façon à faire communiquer une zone à l'intérieur de l'enveloppe du faisceau avec une zone du collecteur chaud (18).

3. Réacteur nucléaire suivant la revendication 1, caractérisé par le fait que la partie en forme de convergent-divergent (45) est fixée sur l'enveloppe de faisceau (12) de façon que son extrémité d'entrée communique avec une zone du collecteur chaud (18) et comporte, fixée à son extrémité de sortie, une partie (46) en forme de conduit cylindrique prolongeant le conduit en forme de convergent-divergent (45, 46) à l'intérieur de l'enveloppe de faisceau (12) jusqu'à l'ouverture basse (23).

4. Réacteur nucléaire suivant la revendication 1, caractérisé par le fait que le tube (38) reliant le col (35a) du convergent-divergent (35) à la partie supérieure de l'espace annulaire (31) est disposé entièrement à l'extérieur de l'enveloppe de faisceau (12).

5. Réacteur nucléaire suivant la revendication 1, caractérisé par le fait que le tube (38') joignant le col (35'a) du convergent-divergent à la partie supérieure de l'espace annulaire (31) est disposé partiellement à l'intérieur de l'enveloppe de faisceau (12).

6. Réacteur nucléaire suivant l'une quelconque des revendications 1 à 5, caractérisé par le fait que le tube (38) joignant le col (35a) du convergent-divergent à la partie supérieure de l'espace annulaire (31) comporte, dans sa partie d'extrémité située à la partie supérieure de l'espace (31) des perforations (39) dans sa paroi latérale disposées suivant plusieurs rangées successives annulaires et horizontales (39a, 39b, 39c) comportant un nombre de perforations décroissant dans la direction du col (35a) du convergent-divergent (35).

7. Réacteur nucléaire suivant la revendication 1, caractérisé par le fait que la partie en forme de convergent-divergent (46) du conduit est placée à l'intérieur de l'espace annulaire (31) et comporte un conduit de sortie (49) de direction sensiblement verticale dont l'extrémité opposée au convergent-divergent (46) est fixée au voisinage de l'ouverture basse (23) de l'enveloppe de faisceau (12).

8. Réacteur nucléaire suivant la revendication 7, caractérisé par le fait que l'extrémité du conduit de sortie (49) du convergent-divergent (46) débouche dans un déviateur (50) dont la partie de sortie est sensiblement verticale et dirigée vers le haut.

**Claims**

1. Fast neutron nuclear reactor of the integrated type comprising a tank containing a primary liquid metal which constitutes the reactor coolant and at least one intermediate heat exchanger (1), immersed in the primary liquid metal contained in the tank and surmounted by a layer of neutral gas (9), which effects the cooling of the primary liquid metal by means of a secondary liquid metal, and comprising a bundle of tubes (13) which are connected at their upper end to an upper tube plate (15) and a cylindrical casing (12) surrounding the vertically arranged bundle (13), the casing (12) comprising a top opening at the upper end of the bundle below the upper tube plate and a bottom opening at the lower end, said openings being located on each side of a wall (17) or projection which separates the inner volume of the reactor tank into an upper part or hot collector (18) which receives the liquid metal coming from the reactor core and a lower part or cold collector (19) which receives the primary liquid metal leaving the exchanger, a bell-shaped wall (30) fixed around the casing (12) of the bundle (13) above the projection (17) and defining therewith an annual space (31) which is open at the bottom and closed at the top, into which the top opening (22) of the bundle casing (12) opens, so as to create a circulation of primary liquid metal coming from the hot collector (18) initially upwards in the annular space (31) and then downwards into the casing (12), in contact with the bundle (13), the bell-shaped wall (30) being connected to a tube (32) which provides a communication between the upper part of the annular space (31) above the top opening (22), and a volume of inert gas, characterised in that the upper tube plate (15) of the heat exchanger (1) is situated, in the operating position of the exchanger, in the layer of neutral gas (9) which surmounts the liquid metal and in that the nuclear reactor further comprises a duct (35) having at least one part which is in the form of a convergent-divergent connecting a zone of the hot collector (18) to a zone located inside the casing of the bundle (12), at a level below the level of the open lower end of the annual space (31) and a substantially vertical tube (38) which connects the neck (35a) of the convergent-divergent to the upper end of the annular space (31) above the top opening (22) in the casing (12) of the bundle (13).

2. Nuclear reactor according to claim 1, characterised in that the part of the duct (35) in the form of a convergent-divergent is fixed at its divergent outlet end to the bundle casing (12), so as to connect a zone inside the bundle casing to a zone of the hot collector (18).

3. Nuclear reactor according to claim 1, characterised in that the part in the form of a convergent-divergent (45) is fixed to the bundle casing (12) so that its inlet end communicates with a zone of the hot collector (18) and comprises, fixed to its outlet end, a part (46) in the form a cylindrical duct which extends the duct in the form of a convergent-divergent (45, 46) inside the tube casing (12) as far as the bottom opening (23).

4. Nuclear reactor according to claim 1, characterised in that the tube (38) connecting the neck (35a) of the convergent-divergent (35) to the upper part of the annular space (31) is arranged entirely outside the bundle casing (12).

5. Nuclear reactor according to claim 1, characterised in that the tube (38') connecting the neck (35'a) of the convergent-divergent to the top of the annular space (31) is arranged partly inside the bundle casing (12).

6. Nuclear reactor according to any of claims 1 to 5, characterised in that the tube (38) connecting the neck (35a) of the convergent-divergent to the top of the annular space (31) has, in its end part located in the top of the space (31) perforations (39) in its side wall, these perforations being arranged in several successive annular and horizontal rows (39a, 39b, 39c) which have a decreasing number of perforations in the direction of the neck (35a) of the convergent-divergent (35).

7. Nuclear reactor according to claim 1, characterised in that the part of the duct in the form of a convergent-divergent (46) is situated inside the annular space (31) and has an outlet duct (49) of substantially vertical direction whose end remote from the convergent-divergent (46) is fixed to the vicinity of the bottom opening (23) in the bundle casing (12).

8. Nuclear reactor according to claim 7, characterised in that the end of the outlet duct (49) of the convergent-divergent (46) opens into a diverter (40) the outlet part of which is substantially vertical and upwardly directed.

**Patentansprüche**

1. Integrierter schneller Neutronenreaktor mit einem Reaktorbehälter, der flüssiges Primärmetall enthält, das das Reaktorkühlmittel bildet und mit mindestens einem Zwischenwärmetauscher (1), der in das flüssige Primärmetall eingetaucht ist, das in dem Behälter enthalten ist und von einer Schicht neutralen bzw. inerten Gases (9) bedeckt ist, wobei der Zwischenwärmetauscher das Abkühlen des flüssigen Primärmetalls durch ein flüssiges Sekundärmetall gewährleistet, wobei der Zwischenwärmetauscher ein Rohrbündel (13) aufweist, dessen Rohre mit ihrem oberen Teil mit einer oberen Rohrplatte (15) verbunden sind und eine Zylinderförmige Hülle (12) das vertikal angeordnete Rohrbündel (13) umhüllt, wobei die Hülle (12) eine obere Öffnung im oberen Bereich des Bündels unterhalb der oberen Rohrplatte und eine untere Öffnung im unteren Bereich zu beiden Seiten einer Trennwand (17) aufweist, die das Innenvolumen des Reaktorbehälters in einen oberen bzw. heißen Kollektorbereich (18), der das Flüssigmetall, das vom Reaktorkern kommt, aufnimmt und einen unteren Teil oder kalten Kollektor (19) unterteilt, der das flüssige Primärmetall. aufnimmt, das aus dem Wärmetauscher austritt, wobei eine Wandung (30) in Form einer Glocke um die Hülle (12) des Rohrbündels (13) oberhalb der Zwischenwand (17) angeordnet ist, die mit dieser einen Ringraum (31) eingrenzt, der in seinem unteren Teil offen und in seinem oberen Teil, in dem die obere Öffnung (22) der Hülle des Rohrbündels (12) mündet, geschlossen ist, derart, daß eine Primärmetallzirkulation gebildet wird, die von dem heißen Kollektor (18) ausgehend zuerst nach oben in den ringförmigen Raum (31) und anschließend von oben nach unten in der Hülle (12) in Kontakt mit dem Rohrbündel (13) geführt wird, wobei die glockenförmige Wandung (30) mit einem Rohr (32) verbunden ist, das die Verbindung zwischen dem oberen Bereich des ringförmigen Raums (31) oberhalb der oberen Öffnung (22) und einem Inertgasvolumen gewährleistet, dadurch **gekennzeichnet,** daß die obere Rohrplatte (15) des Wärmetauschers (1) in Betriebsstellung des Wärmetauschers in der Schicht des neutralen Gases (9) liegt, die über dem Flüssigmetall angeordnet ist und dadurch, daß der Kernreaktor ferner eine Leitung (35) aufweist, die mindestens zum Teil eine konvergent-divergente Form hat und einen Bereich des heißen Kollektors (18) mit einem Bereich im Inneren der Hülle des Bündels (12) auf einer Höhe verbindet, die unterhalb der Höhe des unteren offenen Bereichs des ringförmigen Raums (31) liegt und wobei ein im wesentlichen vertikales Rohr (38) den Hals (35a) des konvergent-divergenten Bereichs mit dem oberen Teil des ringförmigen Raums (31) oberhalb der oberen Öffnung (22) der Hülle (12) des Bündels (13) verbindet.

2. Kernreaktor nach Anspruch 1, dadurch gekennzeichnet, daß der konvergent-divergente Bereich der Leitung (35) mit seinem divergenten Ausgangsende an der Hülle des Bündels (12) derart befestigt ist, daß ein Bereich im Inneren der Hülle des Bündels mit einem Bereich des heissen Kollektors (18) verbunden wird.

3. Kernreaktor nach Anspruch 1, dadurch gekennzeichnet, daß der konvergent-divergente Bereich (45) an der Hülle des Bündels (12) so befestigt ist, daß sein Eingangsende mit einem Bereich des heißen Kollektors (18) verbunden ist und an seinem Außenende befestigt einen Bereich (46) in Form eines Zylinderrohres aufweist, das die konvergent-divergente Leitung (45, 36) im Inneren der Hülle des Bündels (12) bis zu deren unterer Öffnung (23) verlängert.

4. Kernreaktor nach Anspruch 1, dadurch gekennzeichnet, daß das Rohr (38), das den Hals (35a) des konvergent-divergenten Bereichs (35) mit dem oberen Bereich des ringförmigen Raums (31) verbindet ganz außerhalb der Hülle des Bündels (12) angeordnet ist.

5. Kernreaktor nach Anspruch 1,
dadurch gekennzeichnet, daß
das Rohr (38'), das den Hals (35'a) des konvergent-divergenten Rohrs mit dem oberen Bereich des Ringraums (31) verbindet, zum Teil im Inneren der Hülle des Bündels (12) angeordnet ist.

6. Kernreaktor nach einem der Ansprüche 1 bis 5,
dadurch gekennzeichnet, daß
das Rohr (38), das den Hals (35a) des konvergent-divergenten Bereichs mit dem oberen Bereich des Ringraums (31) verbindet, in seinem Endbereich, der im oberen Bereich des Raums (31) angeordnet ist, Perforationen (39) in seiner Seitenwand aufweist, die in mehreren aufeinanderfolgenden ringförmigen horizontalen Reihen (39a, 39b, 39c) angeordnet sind, die jeweils eine Anzahl von Perforationen aufweisen, die in Richtung auf den Hals (35a) des konvergent-divergenten Bereichs (35) abnimmt.

7. Kernreaktor nach Anspruch 1,
dadurch gekennzeichnet, daß
der konvergent-divergente Bereich (46) der Leitung im Inneren des ringförmigen Raums (31) angeordnet ist und eine Ausgangsleitung (49) aufweist, die im wesentlichen vertikal verläuft und dessen dem konvergent-divergenten Bereichen (46) entgegengelegenes Ende in der Nähe der unteren Öffnung (23) der Hülle des Bündels (12) befestigt ist.

8. Kernreaktor nach Anspruch 7,
dadurch gekennzeichnet, daß
das Ausgangsende der Leitung (49) des konvergent-divergenten Bereichs (46) in einer Ableitung (50) mündet, dessen Ausgangsende im wesentlichen senkrecht nach oben gerichtet ist.

FIG_1

FIG_2

FIG_3

FIG_5

FIG_4

FIG_7

FIG_6

FIG_8

EP 0 325 879 B1

FIG_9

FIG_10

15